# DEMANDE DE BREVET EUROPEEN

(11) **EP 3 828 254 A1**
(43) Date de publication de la demande: **02.06.2021**
(21) Numéro de dépôt: 20209737.4
(22) Date de dépôt: 25.11.2020
(51) Int. Cl.: C10L 9/08

(54) **PROCÉDÉ DE NETTOYAGE ET D'ÉLIMINATION DES TANINS PRÉSENTS DANS DES COQUES DE FRUITS À COQUE PAR TORRÉFACTION, UTILISATION DES COQUES DE FRUITS À COQUES TORRÉFIÉES EN TANT QU'ADSORBANTS DE LIQUIDE CONTAMINÉS**

(30) Priorité: 27.11.2019 FR 1913288
(71) Demandeur: Commissariat à l'Energie Atomique et aux Energies Alternatives, 75015 Paris (FR)
(72) Inventeur: DEMEY CEDENO, Hary, 38054 GRENOBLE (FR); MARCHAND, Muriel, 38054 GRENOBLE (FR); RATEL, Gilles, 38054 GRENOBLE (FR); TRIPOLI, Carmelo, 38054 GRENOBLE (FR)
(74) Mandataire: Nony

(57) **Abrégé**

Procédé de nettoyage et d'élimination des tanins présents dans des coques de fruits à coque par torréfaction, Utilisation des coques de fruits à coques torréfiées en tant qu'adsorbants de liquide contaminés.

L'invention concerne un procédé de nettoyage et d'élimination des tanins présents dans des coques de fruits à coques, notamment des coques de noix, comprenant une étape de torréfaction des coques à l'état brut.

Elle concerne également l'utilisation des coques obtenues par le procédé, en tant que produits adsorbants mis en œuvre dans le traitement de l'eau, ou en tant que matériaux isolants pour les bâtiments, ou que matière première de fabrication d'outils ménagers.

## Description

### Domaine technique

La présente invention concerne le domaine du nettoyage et de l'élimination des tanins de la biomasse constituée de coques/coquilles de fruits à coques, en particulier de coques de noix. On précise ici que dans le cadre de l'invention les termes «coques » regroupent les notions de coques et de coquilles.

L'invention vise principalement à améliorer les procédés actuels afin de préparer au mieux les coques de fruits à coques pour des applications diverses, telles que la fabrication de matériaux adsorbants pour les traitements des eaux, et/ou la fabrication des matériaux exempts de tanins à des fins d'utilisation dans l'industrie.

Bien que décrite en référence à l'application de traitement des eaux, l'invention s'applique à toute application de fabrication de matériaux exempts de tanins.

Également, bien que décrite en référence avec des coques de noix, l'invention peut être mise en œuvre à tous les fruits à coques, parmi lesquels les coques des noix oléagineuses, dont les noix de Grenoble, noisettes, Noix du Brésil, Noix de Macadamia, Noix du pecan, Cajou, amandes, pistache

### Technique antérieure

Dans les traitements des eaux, les matériaux biosourcés présentent certains avantages majeurs pour être utilisés comme lits filtrants/adsorbants que l'on peut résumer ainsi:
- capacité d'adsorption élevée (ions métalliques);
- possibilité d'utilisation des déchets de biomasse locale disponible;
- faible cout d'investissement.

En particulier, les coques de noix représentent un potentiel important à ce titre. Par exemple, la France est le 9^{ème} producteur mondial de noix, selon le bilan des années 2018-2019 réalisé par l'établissement national des produits de l'agriculture et de la mer, également appelé FranceAgriMer de FranceAgriMer, qui a estimé que la production est d'environ 38 millions de tonnes/an: [1].

La biomasse de coques de noix peut donc être utilisée comme matière première dans de nombreuses applications, telles que la fabrication de matériaux isolants pour les bâtiments, d'outils ménagers, et d'adsorbants destinés à la purification de l'eau, afin d'éliminer les métaux toxiques dans les effluents industriels, etc. Toutefois, la matière première doit être préparée, traitée, et préalablement nettoyée, afin de garantir une utilisation saine des produits finis.

Pour l'application de traitement des liquides, plusieurs problèmes de prétraitement de la biomasse lignocellulosique, et en particulier les coques de noix qui sont riches en tanins, se posent.

Un problème incontournable est la présence de tanins qui peuvent être libérés lors du contact avec les effluents liquides, produisant de ce fait une coloration brune dans les eaux.

La forte teneur en tanins peut contaminer les réserves d'eau, jusqu'au point que sa consommation peut être toxique.

En particulier, les coques de noix après contact avec l'eau de pluie ont tendance à colorer l'eau, ce qui produit un important flux d'effluents bruns. Cela est dû à la présence de tanins qui sont libérés par la biomasse.

Les tanins sont des composés phénoliques hydrosolubles dotés de caractéristiques spéciales pour la précipitation d'alcaloïdes, de protéines et de gélatines : [2]. Ce sont des structures macromoléculaires, largement présentes dans les bio-ressources, telles que les plantes, le bois, les fruits et les légumes. Leur rôle principal a été identifié en tant qu'agent de protection des plantes contre l'activité bactérienne et le rayonnement UV : [3].

Les tanins agissent en tant qu'anti-nutriments, ils inhibent les enzymes digestives, ils précipitent les protéines et ils diminuent l'absorption de vitamines et de minéraux dans l'organisme: [4].

Les tanins sont généralement classés en composés condensés, et en composés hydrolysables. Ceux-ci sont largement utilisés dans les industries du cuir pour convertir la peau des animaux, en cuir de haute qualité. Bien que plusieurs propriétés anticancéreuses aient été attribuées aux composés de tanins, la consommation élevée par les humains pourrait être toxique car leurs molécules agissent en tant qu'anti-nutriments, ils inhibent les enzymes digestives, précipitent les protéines et diminuent l'absorption de vitamines et de minéraux dans l'organisme : [4].

En outre, les auteurs de la publication [5] ont conclu, à partir des expériences réalisées sur des souris, que les composés de tanins peuvent perturber l'équilibre de la flore gastro-intestinale.

Il est donc nécessaire d'éliminer préalablement les tanins avant d'utiliser la biomasse, notamment les coques de noix, avant que celle-ci soit recyclée pour des applications environnementales, en particulier pour la production de matériaux adsorbants pour le traitement de l'eau.

A ce jour, la méthode couramment utilisée pour éliminer les tanins de la biomasse est l'extraction chimique à l'aide d'une grande variété de solvants, notamment un mélange d'eau et d'acétone, d'éthanol, de méthanol, etc. : [4]. Ce processus a pour inconvénient majeur de nécessiter une grande quantité d'éluant. De plus, la biomasse obtenue est imprégnée de solvants organiques pouvant être toxiques pour plusieurs types d'applications en aval.

D'autres solutions ont été proposées pour l'élimination des tanins de la biomasse solide.

La plupart de ces solutions suggèrent cependant l'utilisation d'éluants, tels que l'acétone ou l'éthanol: voir par exemple la demande de brevet CN103784498.

US2018/0334629 divulgue un dispositif de nettoyage de biomasse comprenant un récipient à explosion de vapeur, dans lequel la biomasse est traitée en augmentant la pression du récipient. Après dépressurisation, la vapeur est libérée et la biomasse récupérée fait l'objet de trois étapes de traitement consécutives, à savoir respectivement un lavage, un séchage mécanique puis un chauffage pour permettre l'évaporation de l'eau liquide. Par conséquent, de nombreuses étapes sont impliquées et le procédé peut s'avérer techniquement difficile car chaque étape implique un temps de résidence. Selon le type de biomasse, le temps de traitement peut être plus long ou plus court. De plus, chaque étape peut consommer de l'énergie, ce qui n'est pas pratique pour une production à grande échelle. Il est précisé dans cette demande de brevet que le processus a permis d'éliminer les substances extractibles légères de la biomasse, sans toutefois mentionner si le dispositif permettait d'éliminer le contenu en tanins de la biomasse solide.

CN203776073U divulgue un système permettant d'éliminer l'astringence des fruits à coques, qui comprend une bande transporteuse et un dispositif de chauffage des fruits constitué d'un échangeur thermique. Le système est conçu pour traiter l'astringence du fruit de la noix avec les coques. De ce fait, la température de chauffage est relativement basse pour éviter une perte des propriétés nutritionnelles des fruits.

Il existe donc un besoin pour améliorer les solutions d'élimination de tanins dans les biomasses de coques de noix, afin de pallier les inconvénients précités, en vue de les utiliser pour des applications environnementales, en particulier pour la production de matériaux adsorbants pour le traitement de l'eau.

Le but de l'invention est de répondre au moins en partie à ce besoin.

### Exposé de l'invention

Pour ce faire, l'invention concerne, sous l'un de ses aspects, un procédé de nettoyage et d'élimination des tanins présents dans des coques de fruits à coques, notamment des coques de noix, comprenant une étape de torréfaction des coques à l'état brut.

Avantageusement, l'étape de torréfaction a lieu à des températures comprises entre 290°C et 350°C.

Selon un mode de réalisation avantageux, l'étape de torréfaction est mise en œuvre dans un four à soles multiples. Les fours à soles multiples actuels fonctionnent sous pression atmosphérique, dans une gamme de température entre 200°C et environ 1050°C et ont pour avantage de présenter une grande surface de réaction disponible. Ils présentent aussi l'avantage de brasser continuellement le produit à traiter.

De préférence, l'étape de torréfaction est réalisée avec un débit continu de coques de noix compris entre 60kg/h à 10t/h, de préférence entre 60 et 100 kg/h pour des petites installations et entre 2 et 10 t/h pour des installations industrielles.

De préférence encore, la durée de l'étape de torréfaction est comprise entre 30 et 60 minutes. L'étape de torréfaction est mise en œuvre sous un débit constant de gaz neutre, tel que l'azote (N₂).

Selon une variante avantageuse, les coques à l'état brut ont un taux d'humidité, avant l'étape de torréfaction, inférieur ou égal à 20%, de préférence inférieur ou égal à 10%.

Ainsi, l'invention consiste à appliquer un traitement thermique de torréfaction sur des coques de fruits à coques, en particulier des coques de noix, à l'état brut pour les nettoyer et éliminer leurs tanins. Le produit biosourcé stable obtenu permet d'envisager son utilisation pour des applications environnementales.

Des conditions optimales de fonctionnement d'un four à soles multiples pour éliminer les tanins des coques de noix à l'état brut dont la teneur en humidité initiale est comprise entre 10 et 20%, sont une température de torréfaction à 350°C et un temps de séjour de 60 minutes. Les inventeurs ont réalisé des essais, décrits ci-après, qui prouvent l'efficacité du traitement de torréfaction choisi.

Ainsi, le procédé selon l'invention permet la fabrication de matériaux à base de coques de noix, stables et sans tanins, qui peuvent être utilisés ultérieurement dans des applications de décontamination des eaux sans libérer de tanins dans le milieu aqueux.

On rappelle ici que la torréfaction de la biomasse, notamment lignocellulosique est jusqu'à ce jour une étape de prétraitement de la biomasse en vue de son injection sous forme pulvérisée dans un réacteur à flux entraîné (réacteur de gazéification) ou dans un réacteur dit de co-combustion (biomasse et charbon) dans une centrale thermique à charbon ou en vue de sa granulation pour réaliser des biocombustibles. En effet, la structure fibreuse et élastique de la biomasse rend sa micronisation énergivore et confère au produit broyé des caractéristiques inadaptées à une injection sous forme pulvérisée. La torréfaction est un traitement thermique doux de la biomasse à l'interface entre le séchage et la pyrolyse, qui vise donc selon l'état de l'art à éliminer l'eau et à modifier une partie de la matière organique de la biomasse pour casser ses fibres.

Autrement dit, le traitement thermique de torréfaction est mis en œuvre jusqu'à ce jour pour altérer la structure fibreuse de la biomasse, facilitant ainsi son broyage et son injection dans un réacteur de gazéification ou de co-combustion.

Le prétraitement par torréfaction améliore également les propriétés de la biomasse en particulier en vue de son stockage en lui conférant notamment un caractère hydrophobe et une résistance aux dégradations biologiques.

De manière surprenante, aucune référence de traitement thermique de torréfaction pour l'élimination des tanins présents dans les coques de noix n'est disponible dans la littérature. L'invention a encore pour objet l'utilisation des coques de noix obtenues par le procédé selon qui vient d'être décrit, en tant que produits adsorbants mis en œuvre dans le traitement de l'eau, ou en tant que matériaux isolants pour les bâtiments, ou que matière première de fabrication d'outils ménagers.

D'autres avantages et caractéristiques de l'invention ressortiront mieux à la lecture de la description détaillée d'exemples de mise en œuvre de l'invention faite à titre illustratif et non limitatif en référence aux figures suivantes.

### Brève description des dessins

[Fig 1] est une vue du schéma global d'une installation de traitement de coques de noix comprenant un four de torréfaction à soles multiples conforme à l'invention.
[Fig 2] est une reproduction photographique de différents échantillons comparatifs et selon l'invention, montrant la présence ou non d'effluents résiduels après contact avec la biomasse de coques de noix.
[Fig 3] est un histogramme montrant l'efficacité d'adsorption du plomb par des coques noix brutes et torréfiée à différentes températures selon l'invention, en tant qu'adsorbants.
[Fig 4] est une reproduction photographique de différents échantillons selon l'invention, montrant la présence d'effluents résiduels après contact avec la biomasse de coques de noix brutes et torréfiées, ayant subi une adsorption de plomb.

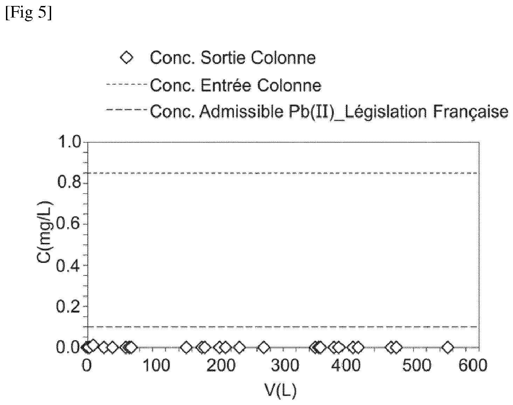

[Fig 5] est une représentation graphique montrant la concentration finale du plomb à la sortie d'une colonne d'adsorption dans laquelle du plomb a été adsorbé en continu par des coques de noix torréfiées en tant qu'adsorbants.

### Description détaillée

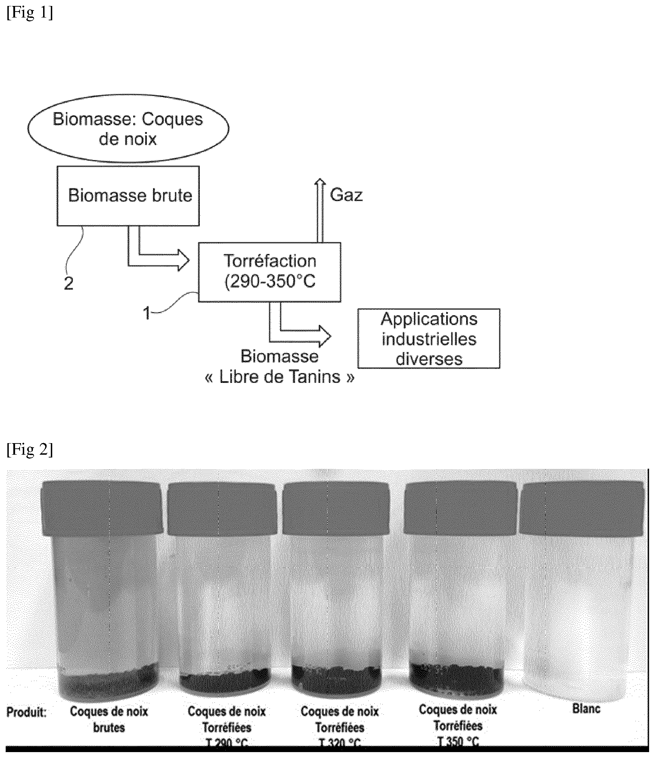

La figure 1 montre schématiquement une installation globale de traitement de coques de noix brutes qui alimentent un four à soles multiples 1 depuis un dispositif d'alimentation 2.

De préférence, le four est conçu pour torréfier des matériaux biosourcés avec une taille de particule « P-45 » selon la normative française CEN/TS 14961, c'est-à-dire, une taille de particule comprise entre 3,15 mm et 45 mm.

La taille de particule des coques de noix standard du marché, non broyées rentrant dans cette catégorie « P-45 », les coques de noix qui alimentent le four peuvent être non broyées. Bien évidemment, la description qui suit s'applique également au cas encore plus favorable de coques de noix broyées.

Le four à soles multiples 1 met en œuvre un traitement thermique de torréfaction, de sorte à nettoyer des coques de noix. Le choix d'un four à soles multiples comme réacteur de traitement de torréfaction est avantageux car il permet de maintenir un flux continu d'entrée de biomasse de 100 kg/h et une température de fonctionnement uniforme dans le processus. Le traitement thermique appliqué aux coques de noix à l'état brut a été réalisé à différentes températures de fonctionnement du four, à savoir respectivement 290 °C, 320 °C et 350 °C, afin de démontrer l'élimination totale des tanins présents dans la biomasse brute initiale.

Le procédé de torréfaction complet met en œuvre les étapes successives comme suit. Etape i/: on réalise l'inertage du four. Pour ce faire, un flux constant d'azote (N2) est introduit dans le four de torréfaction, afin de réduire la teneur en oxygène total, de préférence à un taux inférieur à 1%.

Etape ii/ (optionnelle): on effectue un étalonnage du temps de séjour de la biomasse dans le four à température ambiante. Le temps de séjour doit être compris entre 30 et 60 min pour permettre une torréfaction homogène des coques de noix. On précise ici que cette étape ii/ d'étalonnage est spécifique au four utilisé par les inventeurs. Mais dans le cadre de l'invention, la torréfaction peut tout-à-fait être mise en œuvre dans un autre type de four sans avoir besoin de cet étalonnage.

Etape iii/:on régule la température du four à soles multiples, et la stabilisation thermique au niveau de chaque sole est obtenue, afin de fonctionner à une température de torréfaction uniforme. Cette étape iii/ est également optionnelle car liée au four utilisé par les inventeurs. Etape iv/: on effectue alors le traitement de torréfaction de la biomasse : une fois la stabilisation thermique obtenue, un flux continu de biomasse de coques de noix à l'état brut est introduit dans le four, à un débit de 100 kg/h. On veille à ce que le taux d'humidité initial des coques de noix brutes ne dépasse pas 10%.

Etape v/: les coques de noix torréfiées en sortie de four sont alors refroidies à température ambiante.

Les inventeurs ont alors procédé à des analyses des coques de noix torréfiées et refroidies pour mettre en exergue l'élimination des tanins.

Deux paramètres ont ainsi été mesurés : le carbone organique total et l'indice phénolique total.

Pour la mesure du carbone organique total, les inventeurs ont procédé comme suit. Une quantité connue de coques de noix torréfiées, égale à 0,5 g est mise en contact avec un volume de 50 mL d'eau déminéralisée à dose de 10 g/L, à température ambiante (25 °C). Les échantillons sont agités en continu pendant une durée de 24 h, dans un agitateur orbital à une vitesse constante de 250 tr/min. Ensuite, les effluents sont collectés et les particules solides en suspension sont filtrées avec un filtre en papier commercialisé par la société Albet en format standard 25mm x 75mm. Les particules filtrées sont analysées dans un analyseur de carbone organique total (COT mètre), commercialisé par la société Shimadzu.

Trois répétitions ont été effectuées pour chaque échantillon et l'écart type a été estimé à environ + 5 %. Les résultats ont été comparés aux résultats obtenus avec un blanc d'eau déminéralisée, c'est-à-dire qui ne contient pas de biomasse.

Pour la mesure de l'indice de phénol total, les tests ont été réalisés conformément à ce qui est établie par la norme NF EN ISO 14402, avec un rapport solide/liquide de 10 g/L.

Différents échantillons selon l'invention et comparatif (blanc) sont montrés en figure 2. Le tableau 1 ci-dessous montre les résultats des mesures pour différents échantillons.

**[Tableau 1]**

| Type d'effluents | Carbone organique total (mg/L) | Carbone inorganique total (mg/L) | Carbone total (mg/L) | Indice total de phénols (mg/kg sec) |
|---|---|---|---|---|
| Coques de noix brutes | 226.70 | 17.36 | 244.00 | 2.6 |
| Coques de noix torréfiées à 290 °C | 22.36 | 10.93 | 33.29 | 0.2 |
| Coques de noix torréfiées à 320 °C | 22.25 | 12.26 | 34.51 | 0.3 |
| Coques de noix torréfiées à 350 °C | 22.83 | 11.50 | 34.33 | 0.3 |
| Blanc (eau déminéralisée) | 19.00 | 8.86 | 27.86 | ----- |

Les résultats de ce tableau 1 indiquent que le carbone organique total et l'indice total de phénols diminuent d'un facteur 10 dans tous les effluents ayant été en contact avec des coques de noix torréfiées. Les valeurs des effluents qui ont été en contact avec les coques de noix torréfiées sont très similaires à l'échantillon comparatif blanc. Ces résultats sont très pertinents puis qu'ils démontrent que le traitement thermique par torréfaction est efficace pour le nettoyage des coques de noix. On peut donc conclure que la torréfaction dans une gamme de températures entre 290°C et 350°C permet d'éliminer les composés de tanins présents naturellement dans les ressources lignocellulosiques.

Par conséquent, on peut envisager l'utilisation fiable de coques de noix torréfiées, exemptes de tanins, dans différentes applications de traitement aqueux.

Un exemple d'application utilisant des coques de noix brutes et torréfiées selon l'invention a été mis en œuvre par les inventeurs.

Des tests d'adsorption ont été effectués en utilisant le plomb connu comme métal toxique généralement présent dans les eaux industrielles et métallurgique et qui représente un danger pour la santé publique.

L'Organisation Mondiale de la Santé (OMS) a ainsi indiqué que le plomb était un élément susceptible d'avoir des effets cancérogènes sur les humains. Une valeur limite de concentration maximale de 0,01 mg/L dans l'eau potable (eau domestique) est recommandée. La législation française, conformément à l'arrêté du 02/02/1998 (article 32, modifié par l'arrêté du 25/06/2018), recommande une valeur maximale autorisée de 0,1 mg/L dans les eaux de rejet industrielles.

Pour cette raison, des solutions efficaces et durables sont nécessaires pour éliminer ce type de contaminants.

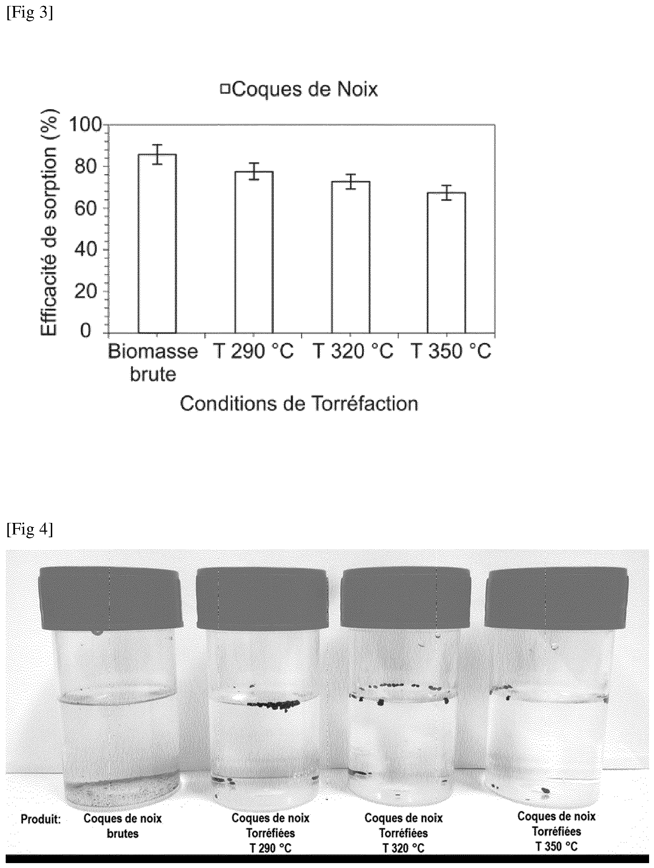

La figure 3 illustre les résultats d'efficacité d'adsorption du plomb par des coques noix brutes et torréfiées à différentes températures selon l'invention, en tant qu'adsorbants. La dose d'adsorbant utilisée était de 1 g de coques de noix pour 1 litre de solution de plomb contaminée à une concentration de 1 mg/L.

Les résultats de la figure 3 démontrent la possibilité d'utiliser des coques de noix torréfiées pour des applications d'adsorption de plomb. Une efficacité d'adsorption de 87% a été obtenue en utilisant des coques de noix brutes, qui n'ont pas subi de traitement de torréfaction et une efficacité de 68-78% avec des coques de noix torréfiées selon l'invention. Il est néanmoins recommandé d'utiliser les coques de noix torréfiées comme adsorbants, au lieu de celles brutes non torréfiées, car comme cela ressort de la figure 4, l'effluent résiduel après le processus d'adsorption ne contient pas de molécules organiques dissoutes, qui sont généralement libérées de la biomasse d'origine.

Certaines expériences supplémentaires de la part des inventeurs ont permis de déterminer la capacité maximale d'adsorption des coques de noix torréfiées, estimée à 8300 mg de plomb par 1 kg de coques de noix torréfiées (8300 mg/kg). Cela signifie que 8,3 m³ d'eau contenant 1 mg/L de plomb peuvent être décontaminés pour chaque kilogramme de coques de noix torréfiées, dans des conditions de fonctionnement optimales.

Il est important de mentionner que les eaux usées ayant été en contact avec les coques de noix torréfiées pendant le processus d'adsorption sont exemptes de composés organiques (tanins), tandis que l'eau qui était en contact avec la biomasse brute a une concentration de l'ordre de 220 mg/L de carbone organique, qui fait partie des molécules libérées par la biomasse.

Il est possible donc, de conclure que le procédé thermique de torréfaction permet la fabrication de matériaux stables sans tanins, qui peuvent être utilisés ultérieurement en tant qu'adsorbants, dans des applications de traitement aqueux. Les coques de noix torréfiées utilisées comme adsorbants permettent ainsi d'éviter la libération de composés organiques pouvant être en contact avec d'autres espèces en solution et donner lieu à des réactions chimiques secondaires.

De plus, une expérience finale a été réalisée par les inventeurs en utilisant une colonne d'adsorption qui forme un système en continu.

Un lit de 3 kg de matériau adsorbant de coques de noix torréfiées a été utilisé et 550 litres d'eau ont été décontaminés avec une concentration initiale en plomb de 0,9-1,0 mg/L. À la sortie de la colonne d'adsorption, la concentration de plomb était nulle. A la fin du test, le matériau n'était pas encore saturé.

Ainsi, la mise en œuvre de coques de noix torréfiées pourrait continuer à décontaminer les eaux sans libérer de tanins dans le milieu aqueux.

Le tableau 2 indique les résultats de caractérisation des coques de noix brutes et torréfiées.

**[Tableau 2]**

| Analyses élémentaires | | | | | | Taux de Cendres (550 °C) | Contenu énergétique |
|---|---|---|---|---|---|---|---|
| Matériau | C (%) | H (%) | N (%) | S (%) | O (%) | Cendres (%) | PCS* (MJ kg⁻¹) |
| Coques de noix brutes *(AOP GRENOBLE)* | 49.40 | 5.60 | 0.60 | 0.08 | 41.52 | 2.80 | 19.80 |
| Coques de noix torréfiées à 290 °C | 67.00 | 5.90 | 0.20 | 0.04 | 25.16 | 1.70 | 25.40 |
| Coques de noix torréfiées à 320 °C | 78.20 | 4.40 | 0.30 | 0.03 | 14.97 | 2.10 | 29.60 |
| Coques de noix torréfiées à 350 °C | 76.00 | 4.80 | 0.30 | 0.03 | 15.67 | 3.20 | 26.60 |

De ce tableau 2, il ressort, comme prévu, à une température de torréfaction plus élevée, la concentration en carbone augmente : de 49,4% dans les coques de noix brutes à 67,0%, 78,2% et 76% dans les coques de noix torréfiées à 290 °C, 320 °C et 350 °C, respectivement. Le Pouvoir Calorifique Supérieur (PCS) a également augmenté de 19,80 MJ/kg à 29,60 MJ/kg dans les coques de noix torréfiées à 320 °C.

Le fait que les valeurs de PCS des coques de noix torréfiées à 350 °C sont légèrement inférieures à celles torréfiées à 320 °C peut s'expliquer par le pic d'exothermicité produit lors de la torréfaction à 350 °C. Les coques de noix ont été en combustion pendant une courte période en présence d'oxygène, après torréfaction à 350 °C, ce qui diminue la teneur en carbone et la teneur en énergie du produit résultant.

D'autres variantes et améliorations peuvent être envisagées sans pour autant sortir du cadre de l'invention.

Par exemple, d'autres fours que les fours à soles multiples peuvent être envisagés pour mettre en œuvre le procédé de torréfaction de coques de noix conforme à l'invention.

### Liste des références citées

[1] : France AgriMer, Bilan de Campagne: La Noix en 2018-2019. ISSN 2428-0119.
[2] : Bate-Smith, E.C., Swein, T., « Flavonoid compounds ». 192, in: Comparative Biochemistry (eds. H.S. Mason, A.M. Florkin), Academic Press, New York, pp.755-809.
[3] : Shirmohammadli, Y., Efhamisisi, D., Pizizi, A., « Tannins as a sustainable raw materialfor green chemistry: A review », Industrial crops & products 126 (2018) 316-332.
[4]: Karamac, M., Kosinska, A., Rybarczyk, A., Amarowicz, R., « Extraction and chromatographie separation of tannin fractions from tannin-rich plant material », Pol. J. Food Nutr. Sci. 57(4) (2007) 471-474.
[5]: Samanta, S., Giri, S., Parua, S., Nandi, D.K., Pati, B.R., Mondai, K.C., «Impact of tannic acid on the gastrointestinal microflora, » Microb. Ecol. Health Dis 16 (2004) 32-34.

## Revendications

1. Procédé de nettoyage et d'élimination des tanins présents dans des coques de fruits à coques, notamment des coques de noix, comprenant une étape de torréfaction des coques à l'état brut.

2. Procédé selon la revendication 1, l'étape de torréfaction ayant lieu à des températures comprises entre 290°C et 350°C.

3. Procédé selon la revendication 1 ou 2, l'étape de torréfaction étant mise en œuvre dans un four à soles multiples.

4. Procédé selon l'une des revendications précédentes, l'étape de torréfaction étant réalisée avec un débit continu de coques compris entre 60kg/h à 10t/h.

5. Procédé selon l'une des revendications précédentes, la durée de l'étape de torréfaction étant comprise entre 30 et 60 minutes.

6. Procédé selon l'une des revendications précédentes, l'étape de torréfaction étant mise en œuvre avec un débit constant de gaz neutre, tel que l'azote (N2).

7. Procédé selon l'une des revendications précédentes, les coques à l'état brut ayant un taux d'humidité, avant l'étape de torréfaction, inférieur ou égal à 20%, de préférence inférieur ou égal à 10%.

8. Utilisation des coques obtenues par le procédé selon l'une des revendications 1 à 7, en tant que produits adsorbants mis en œuvre dans le traitement de l'eau, ou en tant que matériaux isolants pour les bâtiments, ou que matière première de fabrication d'outils ménagers.
